# EUROPÄISCHE PATENTANMELDUNG

(11) **EP 3 159 624 A1**
(43) Veröffentlichungstag der Anmeldung: **26.04.2017**
(21) Anmeldenummer: 15190440.6
(22) Anmeldetag: 19.10.2015
(51) Int. Cl.: F24J 2/52

(54) **MONTAGEVERFAHREN UND BEFESTIGUNGSVORRICHTUNG ZUM MONTIEREN MEHERER PLATTEN AUF EINER GEMEINSAMEN TRÄGERFLÄCHE**

(71) Anmelder: Reh, Gerhard, 54341 Fell (DE)
(72) Erfinder: Reh, Gerhard, 54341 Fell (DE)
(74) Vertreter: Westphal, Mussgnug & Partner Patentanwälte mbB

(57) **Zusammenfassung**

Die Erfindung betrifft ein Montageverfahren und eine Befestigungsvorrichtung (10) für mehrere Platten (20), insbesondere Photovoltaikplatten, auf einer gemeinsamen Trägerfläche (1) umfassend zumindest die nachfolgenden Verfahrensschritte:
1.1 Befestigen mehrerer Befestigungsvorrichtungen (10) in einem durch die Platten (20) vorgegebenen zumindest zweidimensionalen Muster mit regelmäßigen Abständen der Befestigungsvorrichtungen (10) zueinander,
1.2 wobei die Befestigungsvorrichtungen (10) zum späteren Halten der Platten (20) zumindest aufweisen:
- eine der Trägerfläche (1) zugewandte Aufnahmefläche (16),
- eine der Trägerfläche (1) abgewandte Stützfläche (12),
- zumindest zwei darauf angeordnete Seitenhaken (17) in einem mittleren Abstand von der Trägerfläche (1) und ein Mittelhaken (18) in einem Endabstand von der Trägerfläche (1),

1.3 Aufsetzen einer ersten der zu montierenden Platten (20) mit einer ersten mittleren Ecke zumindest in die Nähe einer ersten der Befestigungsvorrichtungen (10) auf der Trägerfläche (1) und Einschieben in einen Bereich zwischen der Trägerfläche (1) und der Aufnahmefläche (16) der ersten Befestigungsvorrichtung (10),
1.4 Ablegen der ersten Platte (20) auf drei weiteren der Platte (20) entsprechend angeordneten Befestigungsvorrichtungen (10),
1.5 Einhaken oder Umhaken der Platte (20) in jeweils einen der auf den weiteren drei Befestigungseinrichtungen (10) angeordneten Seitenhaken (17) und Mittelhaken (18).

## Beschreibung

Die Erfindung betrifft ein Montageverfahren für mehrere Platten, insbesondere Photovoltaikplatten, auf einer gemeinsamen Trägerfläche. Solche Platten werden bisher beispielsweise auf Dächern mit oder ohne Gefälle oder im freien Land einzeln aufgebockt oder auf einem gemeinsamen Schienensystem befestigt.

Es besteht ein Problem darin, dass solche Platten, wie beispielsweise Solarmodule, beispielsweise auf Ein- oder Mehrfamilienhausdächern, sehr flexibel ausgelegt werden müssen, um möglichst eine herkömmliche Dacheindeckung mit beispielsweise Ziegeln unterhalb Platten vollständig ersetzen zu können. Beispielsweise erfordern solche Platten auf einer Lattung ohne anderweitige Dachhaut eine definierte Verlegung unter Berücksichtigung recht großzügiger Bautoleranzen mit robusten Dichtapplikationen.

Dieses Problem wird gelöst durch ein Montageverfahren nach Anspruch 1 und / oder eine Befestigungsvorrichtung nach Anspruch 4.

Vorteilhafte Ausführungsformen sind in den jeweiligen Unteransprüchen angegeben.

Die Erfindung ermöglicht es einem Monteur, die Platten geschuppt oberhalb der Trägerfläche aufeinander abzulegen und in ihrer gewollten Ausrichtung zueinander zu fixieren. Dabei ist eine einfache Montage weniger Teile nach einfachen Mustern zur Arbeitsvorbereitung möglich.

Zum Montieren zumindest dreier Ecken zumindest dreier sich in demselben Montagepunkt begegnender Platten ist für jede dieser sich in dem Montagepunkt begegnenden Ecken um einen Montagepunkt umlaufend je Ecke zumindest eine Aufnahme gebildet. Die Aufnahmen sind um jeden Montagepunkt in zumindest zwei unterschiedlichen Höhenbereichen oberhalb der Trägerfläche angeordnet.

Als besonders positives Ergebnis der Erfindung können einzelne Platten aus einer verlegten Platten-Fläche ausgewechselt oder herausgenommen werden, ohne dass von einem Rand aus bis zur auszuwechselnden Platte hin zumindest entlang eines gewissen Weges oder Feldes Platte für Platte abgedeckt werden müsste. Bei Photovoltaikmodulen ist das von großem wirtschaftlichen Nutzen. Sollte auf einem komplett verlegten Dach mittendrin ein Photovoltaikmodul versagen, kann man das selbige bei erfindungsgemäßer Montage mittels erfindungsgemäßen Befestigungsvorrichtungen mit wenigen Handgriffen mitten im Dach einzeln herausnehmen und erneuern. Dabei können die vorher gebrauchten Befestigungsvorrichtungen auf der Lattung verbleiben. Ausschließlich die Platte selbst ist zu wechseln.

Erfindungsgemäß umfasst das Befestigen mehrerer Befestigungsvorrichtungen in einem durch die Platten vorgegebenen zumindest zweidimensionalen Muster mit regelmäßigen Abständen der Befestigungsvorrichtungen zueinander, welche Befestigungsvorrichtungen aufweisen: eine der Trägerfläche zugewandte Aufnahmefläche, eine der Trägerfläche abgewandte Stützfläche, zumindest zwei darauf angeordnete Seitenhaken in einem mittleren Abstand von der Trägerfläche und einen Mittelhaken in einem Endabstand von der Trägerfläche, die Verfahrensschritte Aufsetzen einer ersten der zu montierenden Platten mit einer ersten mittleren Ecke zumindest in die Nähe einer ersten der Befestigungsvorrichtungen auf der Trägerfläche oder einer davon abweichenden Basisplatte und Einschieben in einen Bereich zwischen der Trägerfläche oder Basisplatte und der Aufnahmefläche der ersten Befestigungsvorrichtung, Ablegen der ersten Platte auf drei weiteren der zu verlegenden Plattenart entsprechend angeordneten Befestigungsvorrichtungen, Einhaken oder Umhaken der ersten Platte in jeweils einen der auf den weiteren drei Befestigungseinrichtungen angeordneten Seitenhaken und Mittelhaken.

Die Erfindung wird nachfolgend eingehender an Hand von einem in Figuren dargestellten Ausführungsbeispiel erläutert. Zur Erfindung zeigen
- Figur 1: eine Draufsicht auf eine erfindungsgemäße Befestigungsvorrichtung nach einem ersten Ausführungsbeispiel von oben mit Blick auf drei auf eine Stütz- und Klemmplatte aufgenieteten Haken,
- Figur 2: eine Ansicht von unten auf die Stütz- und Klemmplatte aus Figur 1 in separater Darstellung,
- Figur 3A: eine Seitenansicht auf die Befestigungsvorrichtung aus Figur 1 zur Verdeutlichung dreier Höhenbereiche zur Aufnahme der hier nicht aber in den Figuren 6, 9 und 10 dargestellten Platten,
- Figur 3B: eine Seitenansicht analog zu Figur 3A auf eine Stütz- und Klemmplatte nach einem zweiten vorteilhaften Ausführungsbeispiel,
- Figur 4A: eine Draufsicht auf den Mittelhaken aus Figur 1 in separater Darstellung,
- Figur 4B: eine Seitenansicht auf den Mittelhaken aus Figur 4A in separater Darstellung,
- Figur 5A: eine Draufsicht auf einen der beiden Seitenhaken aus Figur 1 in separater Darstellung,
- Figur 5B: eine Seitenansicht auf den Seitenhaken aus Figur 5A in separater Darstellung,
- Figur 6: eine Draufsicht auf einen Montagepunkt mit einer oberen in den Mittelhaken eingehängten Platte zwei mittleren in die Seitenhaken eingehängten Platten und einer unteren zwischen Stützen eingeschobenen Platte (alle Platten nur auszugsweise, alles in transparenter Darstellung zur Verdeutlichung einer Plattenüberlappung),
- Figur 7: eine ausschnittsweise Ansicht auf eine Trägerfläche, die für eine Montage bereitliegt,
- Figur 8: die Trägerfläche aus Figur 7 mit darauf montierten erfindungsgemäßen Befestigungsvorrichtungen,
- Figur 9: die Trägerfläche mit Befestigungsvorrichtungen aus Figur 8 mit eingehängten Platten und
- Figur 10: ein vergrößerter Ausschnitt aus Figur 9 in transparenter Darstellung.

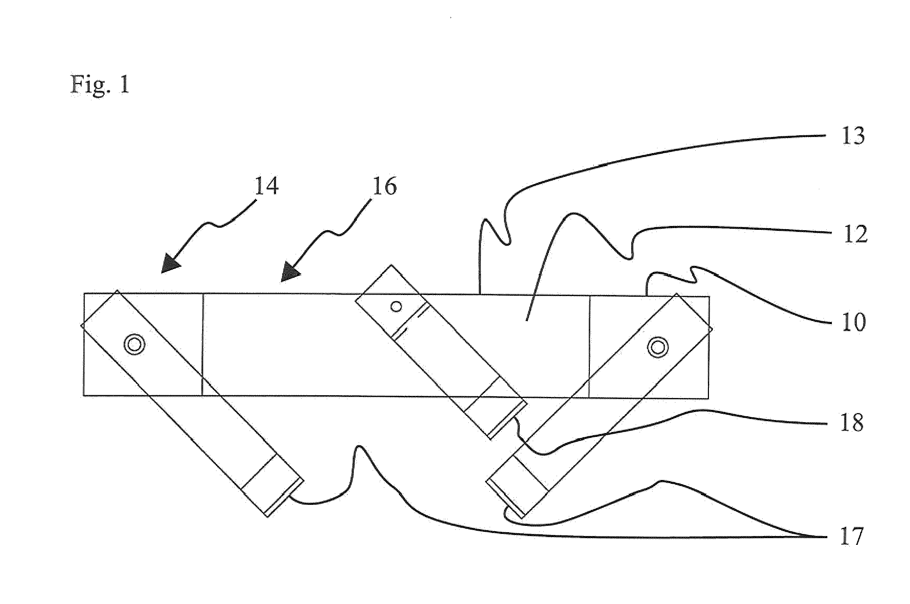

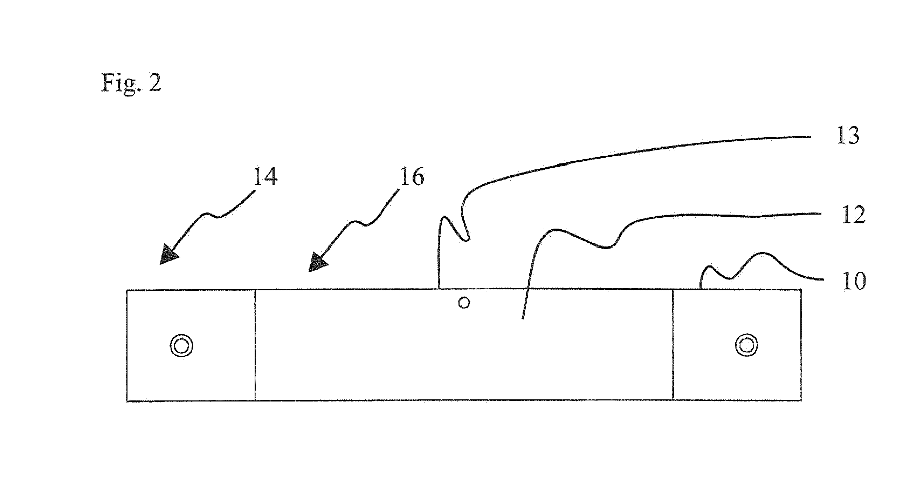

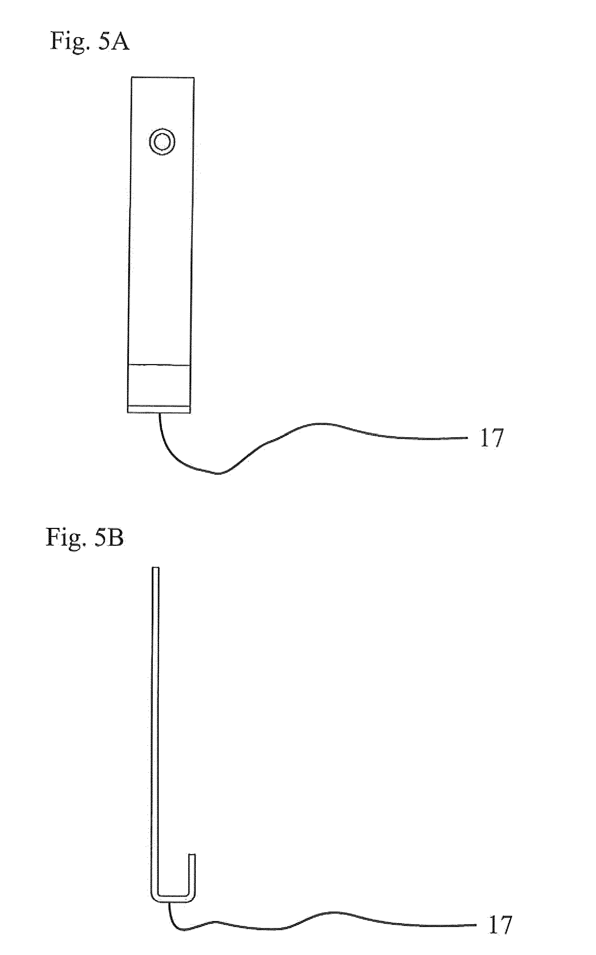

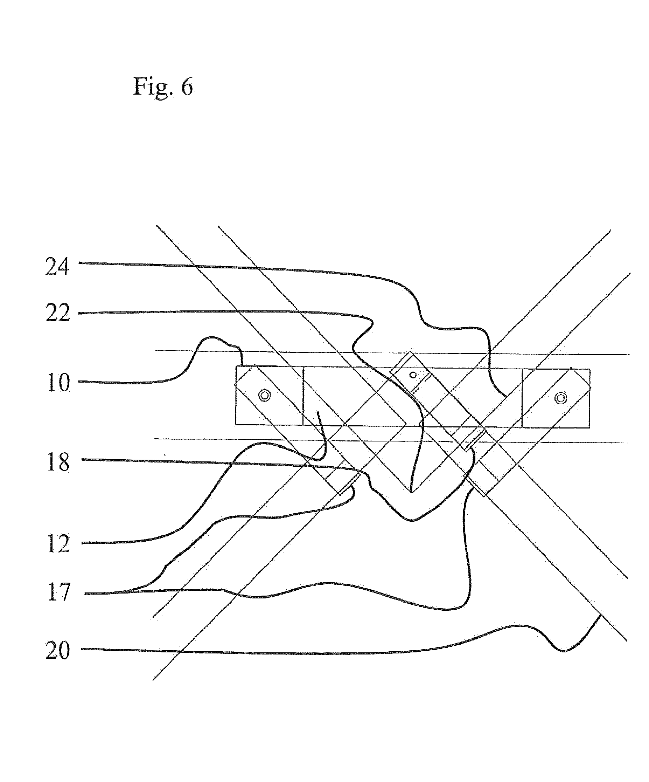

In den Figuren 1 bis 6 und 8 bis 10 sind erfindungsgemäße Ausführungsbeispiele einer Befestigungsvorrichtung 10, 10' dargestellt. Die Befestigungsvorrichtung 10, 10' kann nach einem erfindungsgemäßen Montageverfahren für die Befestigung mehrerer Platten 20, insbesondere Photovoltaikplatten, verwendet werden. Ein solches Montageverfahren ist in den Figuren 6 bis 10 näher verdeutlicht.

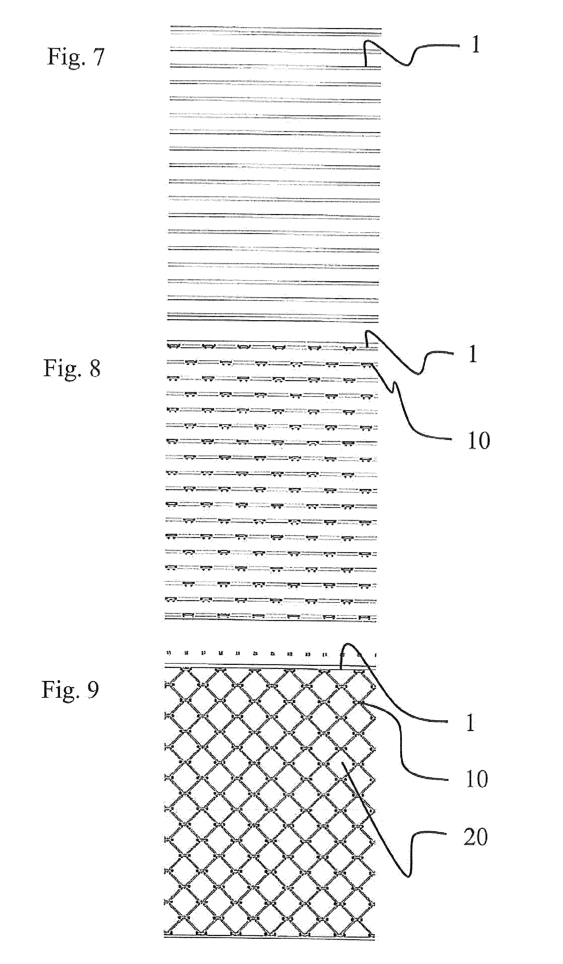

Die Befestigung der Platten 20 hat auf einer gemeinsamen Trägerfläche 1 zu erfolgen. Gemäß einer vorteilhaften Ausführungsform des erfindungsgemäßen Montageverfahrens folgen dazu gemäß den Darstellungen der Figuren 7 bis 9 folgend die folgenden Verfahrensschritte aufeinander: Befestigen mehrerer Befestigungsvorrichtungen 10 in einem durch die Platten 20 vorgegebenen vorliegend zweidimensionalen Muster (vgl. Figur 7) mit regelmäßigen Abständen der Befestigungsvorrichtungen 10 zueinander. Die in den Figuren 1 bis 6 und 10 näher dargestellten Befestigungsvorrichtungen 10, 10' weisen zum späteren Halten der Platten 20 eine der Trägerfläche 1 zugewandte Aufnahmefläche 16 oberhalb eines ersten Höhenbereichs 15, eine der Trägerfläche 1 abgewandte Stützfläche 12, zwei darauf angeordnete Seitenhaken 17 zur Bereitstellung eines zweiten Höhenbereichs 11 in einem mittleren Abstand von der Trägerfläche 1 und einen Mittelhaken 18 zur Bereitstellung eines dritten Höhenbereichs 19 in einem Endabstand von der Trägerfläche 1 auf. Weiterhin folgt ein Aufsetzen einer ersten der zu montierenden Platten 20 mit einer ersten mittleren Ecke zumindest in die Nähe einer ersten der Befestigungsvorrichtungen 10 auf der Trägerfläche 1 und ein Einschieben der ersten mittleren Ecke in einen Aufnahmebereich 14.A im ersten Höhenbereich 15 zwischen der Trägerfläche 1 und der Aufnahmefläche 16 der ersten Befestigungsvorrichtung 10, 10'. Dann folgt ein Ablegen der ersten Platte 20 auf drei weiteren, den Platten 20 entsprechend angeordneten Befestigungsvorrichtungen 10 und ein Einhaken der Platte 20 in jeweils einen der auf den weiteren drei Befestigungseinrichtungen 10 angeordneten Seitenhaken 17 und Mittelhaken 18 in dem dritten Höhenbereich 19.

Möchte der Anwender statt der dargestellten quadratischen Platten 20 rechteckige Platten mit längliche Ausdehnung verlegen, ist es im Rahmen der Erfindung möglich, die Haken entsprechend unterschiedlich lang auszubilden und ggf. die Länge oder Fläche der Befestigungsvorrichtung an sich anzupassen (nicht dargestellte vorteilhafte Ausführungsformen).

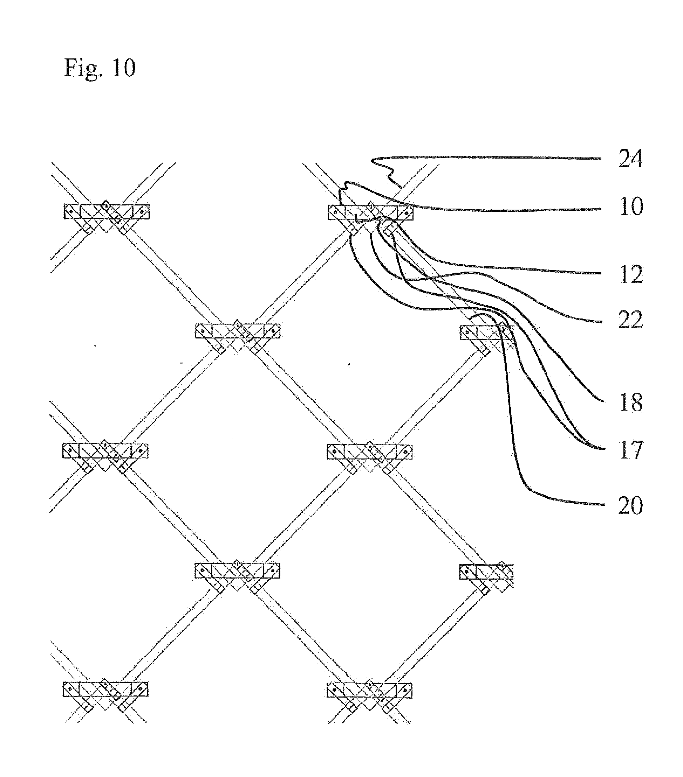

Nach dem Befestigen der ersten Platte 20 werden weitere Platten 20 benachbart angebracht. Durch die musterhafte Anordnung der Befestigungsvorrichtungen 10 (vgl. Figur 8) auf der Trägerfläche 1, kommt es, wie in Figur 10 vergrößert mit transparenten Platten und transparenter Befestigungsvorrichtung dargestellt, zu einer Überlappung der jeweils angrenzend befestigten Platten 20. Legt man diese Platten 20 nun ab, kommen zwei seitliche Ecken der Platte 20 und/oder eine weitere mittlere Ecke der Platte 20 auf der jeweiligen Befestigungsvorrichtung 10 benachbart zu einem Hakenüberstand zum Liegen. Damit das Einhaken erfolgen kann, muss die erste mittlere Ecke der Platte aus dem Aufnahmebereich 14.A zwischen der Trägerfläche 1 und der Aufnahmefläche 16 herausgelassen werden, vgl. Figur 6.

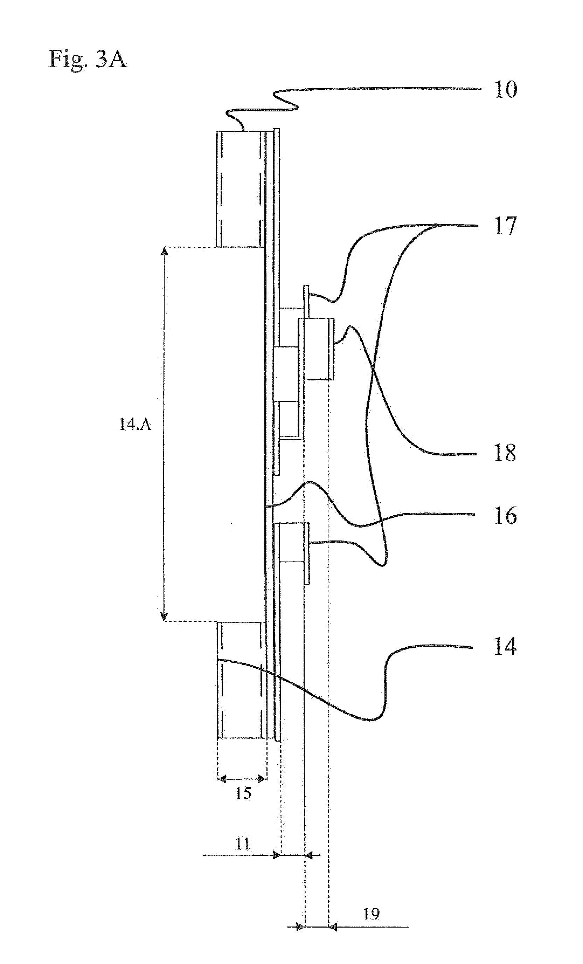

Für das Montieren von zumindest drei Ecken auf der Befestigungsvorrichtung 10, 10', müssen zumindest drei Aufnahmen den Montagepunkt der begegnenden Ecken umlaufend und/ oder im Montagepunkt selbst zentriert auf ein und derselben Stütz- und Klemmplatte angeordnet sein. Dies wird durch die in Figur 3A gezeigte Anordnung der Haken 17, 18 in drei unterschiedlichen Höhenbereichen 15, 11, 19 oberhalb der Trägerfläche 1 gewährleistet. Die Unterste der Aufnahmen ist in einem ersten Höhenbereich 15 zwischen der Trägerfläche 1 und der der Trägerfläche 1 zugewandten Aufnahmefläche 16 gebildet. Dies erfolgt durch zwei Stützen 14 zwischen der Trägerfläche 1 und der Aufnahmefläche 16, die als Abstandhalter für den ersten Höhenbereich 15 dienen. Für ein Einhaken in seitliche Aufnahmen in dem zweiten Höhenbereich 11, sind zwei voneinander beabstandete seitliche Haken 17 für jeweils eine weitere Ecke der weiteren Platten 20 ausgeführt.

Auf der Trägerfläche 1 sind die Stützen 14 als zwei Verbindungsstücke zu befestigen, wobei die Aufnahmefläche 16 der Trägerfläche 1 zugewandt sein muss. Durch diese erfindungsgemäße Konstruktion ist zumindest eine Stütz- und Klemmplatte 13 für das Aufnehmen der ersten Ecke der Platte 20 oberhalb der Trägerfläche 1 gehalten. Diese Stütz- und Klemmplatte 13, welche der Trägerfläche 1 zugewandt ist, weist die Aufnahmefläche 16 auf und steht den Aufnahmebereich 14.A bildend zur Trägerfläche 1 in einem gesicherten Abstand.

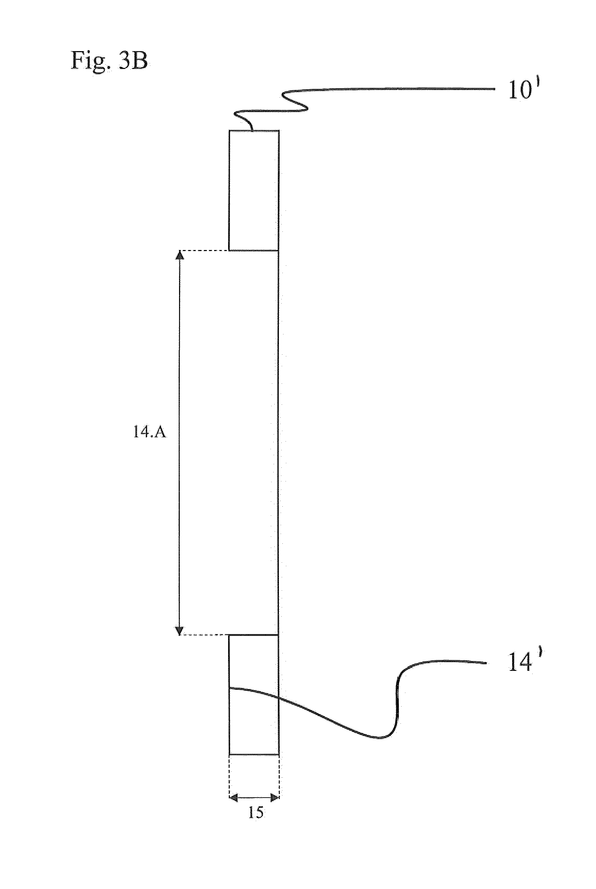

Als alternatives Ausführungsbeispiel zu der aus Blech und Blöcken gefertigten Stütz- und Klemmplatte 13 ist in Figur 3.B eine im Aluminiumstrangguss gefertigte Stütz- und Klemmplatte 10' gezeigt, wobei die Stützen integral angeformt sind. Figur 3.B ist eine Seitenansicht mit blick auf eine Schnittkante, entlang welcher Schnittkante der Strangguss ablängbar ist.

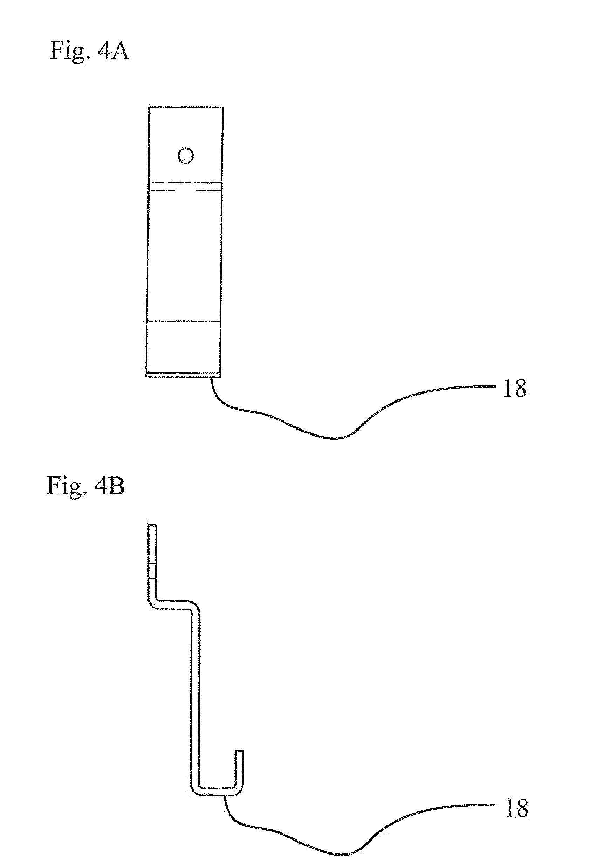

Die Mittelhaken 18 dienen zur Aufnahme einer unteren Ecke der Platte 20 in dem dritten Höhenbereich 19 und sind zum Erreichen der Stütz- und Klemmplatte 13 entsprechend abgewinkelt, vgl. Figur 4B. Der Mittelhaken 18 bildet mithin einen Anschlag für die Platte 20.

Der zweite Höhenbereich 11 wird durch einen an der Stützfläche 12 drehbar befestigten Haltearm und die gegenüberliegend ausgebildete kurze Haltefläche des freien Endes des Mittelhakens 17 begrenzt.

Insgesamt sind im Falle der beiden dargestellten Ausführungsbeispiele exakt vier erfindungsgemäße Aufnahmen in drei Höhenbereichen 15, 11, 19 oberhalb der Trägerfläche 1 für vier Ecken sich im Montagepunkt begegnender rechteckiger oder gar quadratischer Platten 20 ausgebildet, vgl. Figur 10. Die unterste Aufnahme befindet sich zwischen der Trägerfläche 1 und der Aufnahmefläche 16. Darüber liegen zwei Aufnahmen gleichen Höhenbereichs in Form von zwei voneinander beabstandeten Seitenhaken 17 und die oberste Aufnahme liegt durch den Mittelhaken 18 ausgebildet in dem obersten Höhenbereich oder anders ausgedrückt mit einer kleinen Stützfläche in einem Endabstand von der Trägerfläche 1 entfernt. Die seitlichen Aufnahmen und die oberste Aufnahme sind prinzipiell gleich als Schwenkhaken ausgebildet und auf derselben Stützfläche 12 angeordnet. Diese Stützfläche 12 verläuft zumindest abschnittsweise entlang einer zur Trägerfläche 1 parallelen Ebene.

### Bezugszeichenliste

- 1: Trägerfläche

- 10: Befestigungsvorrichtung
- 11: zweiter Höhenbereich
- 12: Stützfläche
- 13: Stütz- und Klemmplatte
- 14: Stütze
- 14.A: Aufnahmebereich
- 15: erster Höhenbereich
- 16: Aufnahmefläche
- 17: Seitenhaken
- 18: Mittelhaken
- 19: dritter Höhenbereich

- 20: Platte
- 22: untere Ecke der Platte
- 24: unteres Kantenende

## Patentansprüche

1. Montageverfahren für mehrere Platten (20), insbesondere Photovoltaikplatten, auf einer gemeinsamen Trägerfläche (1) umfassend zumindest die nachfolgenden Verfahrensschritte:
1.1 Befestigen mehrerer Befestigungsvorrichtungen (10) in einem durch die Platten (20) vorgegebenen zumindest zweidimensionalen Muster mit regelmäßigen Abständen der Befestigungsvorrichtungen (10) zueinander,
1.2 wobei die Befestigungsvorrichtungen (10) zum späteren Halten der Platten (20) zumindest aufweisen:
1.2.1 eine der Trägerfläche (1) zugewandte Aufnahmefläche (16),
1.2.2 eine der Trägerfläche (1) abgewandte Stützfläche (12),
1.2.3 zumindest zwei darauf angeordnete Seitenhaken (17) in einem mittleren Abstand von der Trägerfläche (1) und ein Mittelhaken (18) in einem Endabstand von der Trägerfläche (1),
1.3 Aufsetzen einer ersten der zu montierenden Platten (20) mit einer ersten mittleren Ecke zumindest in die Nähe einer ersten der Befestigungsvorrichtungen (10) auf der Trägerfläche (1) und Einschieben in einen Bereich zwischen der Trägerfläche (1) und der Aufnahmefläche (16) der ersten Befestigungsvorrichtung (10),
1.4 Ablegen der ersten Platte (20) auf drei weiteren der Platte (20) entsprechend angeordneten Befestigungsvorrichtungen (10),
1.5 Einhaken oder Umhaken der Platte (20) in jeweils einen der auf den weiteren drei Befestigungseinrichtungen (10) angeordneten Seitenhaken (17) und Mittelhaken (18).

2. Montageverfahren nach Anspruch 1, **dadurch gekennzeichnet, dass** auf das Montieren der ersten Platte (20) weitere derartige Montageabläufe mit benachbart anzuordnenden Platten (20) durchgeführt werden, wobei als Folge des Musters, in dem die Befestigungsvorrichtungen (10) auf der Trägerfläche (1) angeordnet sind und der Plattenabmaße die angrenzend montierten Platten (20) einander überlappen.

3. Montageverfahren nach einem der Ansprüche 1 oder 2,
**dadurch gekennzeichnet, dass** beim Ablegen zwei seitliche Ecken der Platte und/oder eine weitere mittlere Ecke der Platte auf der jeweiligen Befestigungsvorrichtung (10) benachbart zu einem Hakenüberstand zu liegen kommen und dass zum Einhaken die erste mittlere Ecke der Platte aus dem Bereich zwischen der Trägerfläche (1) und der Aufnahmefläche (16) herausgelassen werden muss.

4. Befestigungsvorrichtung (10) zum Montieren von Platten (20) auf einer gemeinsamen Trägerfläche (1),
**dadurch gekennzeichnet, dass**
zum Montieren zumindest dreier Ecken zumindest dreier sich in demselben Montagepunkt begegnender Platten (20) für jede dieser sich in dem Montagepunkt begegnenden Ecken um den Montagepunkt umlaufend jeweils zumindest eine Aufnahme gebildet ist, dies durch Anordnung der Aufnahmen in zumindest zwei unterschiedlichen Höhenbereichen oberhalb der Trägerfläche (1).

5. Befestigungsvorrichtung (10) nach Anspruch 4, **dadurch gekennzeichnet, dass** eine unterste der Aufnahmen in einem dritten Höhenbereich (19) zwischen der Trägerfläche (1) und einer der Trägerfläche (1) zugewandten Aufnahmefläche (16) gebildet ist, insbesondere mittels zweier Abstandhalter zwischen der Trägerfläche (1) und der Aufnahmefläche (16).

6. Befestigungsvorrichtung (10) nach einem der Ansprüche 4 oder 5, **dadurch gekennzeichnet, dass** für ein Einhaken in einem zweiten Höhenbereich (11) als weitere seitliche Aufnahmen zumindest zwei voneinander beabstandete seitliche Haken für jeweils eine weitere Ecke der weiteren Platten ausgeführt sind.

7. Befestigungsvorrichtung (10) nach einem der Ansprüche 4 bis 6, **dadurch gekennzeichnet, dass** mittels zumindest eines auf der Trägerfläche (1) zu befestigenden Verbindungsstücks mit der Aufnahmefläche (16) der Trägerfläche (1) zugewandt zumindest eine Stütz- und Klemmplatte (13) für das Aufnehmen der ersten Ecke der Platte oberhalb der Trägerfläche (1) gehalten ist, welche Stütz- und Klemmplatte (13) also in einem gesicherten Abstand zur Trägerfläche (1) der Trägerfläche (1) zugewandt die Aufnahmefläche (16) aufweist.

8. Befestigungsvorrichtung (10) nach einem der Ansprüche 4 bis 7, **dadurch gekennzeichnet, dass** die Aufnahmen (18) zur Aufnahme der Platte (20) als Begrenzung des zweiten Höhenbereichs (11) eine Stützfläche (12) und eine Haltefläche eines Hakens aufweist, der dazwischen einen Anschlag für die Platte (20) ausbildet.

9. Befestigungsvorrichtung (10) nach einem der Ansprüche 4 bis 8, **dadurch gekennzeichnet, dass** insgesamt exakt vier Aufnahmen in drei Höhenbereichen (15, 11, 19) oberhalb der Trägerfläche (1) für rechteckige oder gar quadratische Platten ausgebildet sind, nämlich die unterste Aufnahme zwischen der Trägerfläche (1) und der Aufnahmefläche (16), darüberliegend zwei Aufnahmen gleichen Höhenbereichs in Form zwei voneinander beabstandeter seitliche Haken und weiter darüberliegend eine oberste Aufnahme in einem mittleren Bereich.

10. Befestigungsvorrichtung (10) nach Anspruch 9, **dadurch gekennzeichnet, dass** die seitlichen Aufnahmen und die oberste Aufnahme prinzipiell gleich als Schwenkhaken ausgebildet sind, die sämtlich auf ein- und derselben Stützfläche (12) angeordnet sind, welche zumindest abschnittsweise entlang einer zur Trägerfläche (1) parallelen Ebene verläuft.
